# EUROPÄISCHE PATENTSCHRIFT

(11) **EP 1 757 476 B1**
(45) Veröffentlichungstag und Bekanntmachung des Hinweises auf die Patenterteilung: **18.06.2008**
(21) Anmeldenummer: 06015336.8
(22) Anmeldetag: 24.07.2006
(51) Int. Cl.: B60H 1/00

(54) **Verfahren und Vorrichtung zur Regelung eines Klimatisierungssystems für einen Innenraum eines Fahrzeugs**
Method and device for controlling an air conditioning system for a vehicle interior
Procédé et dispositif de contrôle d'un système de climatisation d'habitacle de véhicule

(30) Priorität: 25.08.2005 DE 102005040377
(43) Veröffentlichungstag der Anmeldung: 28.02.2007
(73) Patentinhaber: Behr GmbH & Co. KG, 70469 Stuttgart (DE)
(72) Erfinder: Baruschke, Wilhelm, Dipl.-Ing., 73117 Wangen (DE); Lindauer, Sascha, Dipl.-Ing., 73553 Altdorf (DE); Lochmahr, Karl, Dipl.-Ing., 71665 Vaihingen/Enz (DE); Mayer, Michael, Dipl.-Ing., 75038 Oberderdingen (DE); Pitz, Eric, 70199 Stuttgart (DE)

(56) Entgegenhaltungen:
- EP-A- 0 612 964
- EP-A- 0 968 855
- US-A1- 2002 125 334
- US-A1- 2003 146 290

## Beschreibung

Die Erfindung betrifft ein Verfahren und eine Vorrichtung zur Regelung eines Klimatisierungssystems für einen Innenraum eines Fahrzeugs.

Zur Verbesserung der Innenraumbehaglichkeit und des thermischen Komforts in einem Fahrzeug wird im Allgemeinen ein Klimatisierungssystem verwendet, das auch als Klimaanlage bezeichnet wird und üblicherweise zumindest aus einem Heiz- und Kältemittelkreislauf, einem Klimagerät und einer Luftführung besteht.

Vollautomatische oder halbautomatische Fahrzeugklimatisierungssysteme basieren üblicherweise auf einer Innenraumtemperaturregelung. Die Temperaturregelung erfolgt dabei durch Vergleich eines Temperatursollwerts mit einer gemessenen repräsentativen Innenraumtemperatur. Die Differenz zwischen beiden Werten wird einem Innenraumtemperaturregler zugeführt, dessen Stellgröße weitere unterlagerte Regelkreise für Heizungswärmetauschertemperatur, Austrittstemperatur oder Verdampfertemperatur führt. Eine direkte Steuerung der entsprechenden Aktorik über die Stellgröße des Innenraumtemperaturreglers ist ebenfalls möglich.

Bei allen derartigen Systemen ist die Positionierung des Innenraumtemperaturfühlers oder -sensors problematisch, da ein einzelner Fühlerort nicht für alle Betriebspunkte optimale Signale liefern kann. So ist bei niedrigen Außentemperaturen eine eher tiefe, fußraumlastige Anordnung des Innenraumtemperaturfühlers vorteilhaft, wohingegen bei hohen Außentemperaturen aufgrund der menschlichen Temperaturwahmehmung der Kopfraumtemperatur größere Bedeutung beigemessen wird.

Im Stand der Technik werden daher zwei Innenraumtemperatursensoren verwendet, beispielsweise einer im Mittelkonsolenbereich, der zumeist im Klimasteuergerät integriert ist, und einer im Bereich eines Dachhimmels. Die beiden erfassten Innenraumtemperatur-Sensorsignale werden dabei situationsabhängig gewichtet und zu einem daraus resultierenden Innenraumtemperatursignal verarbeitet, wobei die Übergänge zwischen verschiedenen Wichtungen meist kontinuierlich erfolgen.

Innenraumtemperatursensoren sind jedoch technisch aufwendige Bauteile. Dadurch entstehen hohe Kosten. Für korrekte Messungen ist normalerweise eine Sensorbelüftung erforderlich, beispielsweise mittels eines Sensorgebläses. Ein solches weist eine hohe Ausfallrate auf und stellt eine zusätzliche Geräuschquelle dar. Durch die forcierte Belüftung entsteht ein hoher Verschmutzungsgrad des Sensors. Aufgrund des Belüftungserfordernisses sind die Möglichkeiten zur Formgestaltung eingeschränkt.

Alternativ werden unbelüftete Innenraumtemperaturfühler verbaut, welche die genannten Nachteile teilweise eliminieren. Sie erfordern jedoch einen hohen verfahrenstechnischen Abstimmungsaufwand.

Die US 2002/0125334 A1 beschreibt eine weitere alternative Lösung, bei weicher der reale Innenraumtemperatursensor durch einen virtuellen ersetzt wird. Die virtuelle Innenraumtemperatur wird dabei über ein thermodynamisches Innenraumtemperaturmodell für die Innenraumtemperaturverteilung ermittelt. Das Innenraumtemperaturmodell wird über Fahrzeugdaten wie Glasflächen, Karosseriestruktur, Innenraummaterialien parametriert und mit äußeren und inneren Einflussgrößen beaufschlagt, so dass basierend auf einem Startwert der zeitliche Verlauf der Innenraumtemperatur ermittelt werden kann, Der Startwert für die Innenraumtemperatur wird normalerweise über einen einfachen Temperatursensor auf der Leiterplatte des Klimasteuergeräts ermittelt. Als Einflussgrößen können insbesondere eine Fahrzeuggeschwindigkeit, eine Außentemperatur, die Sonnenwärmeeinstrahlung, eine Austrittstemperatur einer Ausströmöffnung, eine Luftaustrittsgeschwindigkeit beziehungsweise eine Luftmengeneinstellung und eine Luftverteilungseinstellung verwendet werden. Es wird auch vorgeschlagen, zwei virtuelle Innenraumtemperatursensoren zu verwenden, wobei einer im Fußbereich und einer im Kopfbereich angeordnet ist.

Auch bei derartigen fühlerlosen Lösungen im Fahrzeuginnenraum, die ein virtuelles Sensorsignal über ein Innenraumtemperaturmodell generieren, ist die Positionierung des virtuellen Innenraumtemperatursensors problematisch, da ein einzelner Fühler- oder Sensormessort nicht für alle Betriebspunkte optimale Signale liefern kann. Selbst mit zwei virtuellen Sensoren, deren Innenraumtemperaturen gewichtet werden, können nur zwei Extremfälle dargestellt werden.

Der Erfindung liegt daher die Aufgabe zugrunde, ein verbessertes Verfahren und eine verbesserte Vorrichtung der eingangs genannten Art anzugeben, die eine der jeweiligen Situation angepasste Regelung des Klimatisierungssystems erlauben.

Die Aufgabe wird gelöst durch ein Verfahren, welches die in Anspruch 1 angegebenen Merkmale aufweist, sowie durch eine Vorrichtung, welche die in Anspruch 12 angegebenen Merkmale aufweist.

Vorteilhafte Ausgestaltungen sind Gegenstand der abhängigen Ansprüche.

Die bekannte modellbasierte Innenraumtemperaturregelung kann signifikant verbessert werden, indem zunächst Umgebungs- und Fahrzeugbedingungen ermittelt werden, anhand derer ein Ort für einen virtuellen Messpunkt im Innenraum des Fahrzeugs bestimmt wird, wobei mittels eines thermodynamischen Modells für den Innenraum eine den virtuellen Messpunkt des Innenraums repräsentierende Innenraumtemperatur als Regelgröße ermittelt wird.

Mit der Erfindung wird der Komfort für Insassen des Fahrzeugs durch eine angenehmere Temperierung und Klimatisierung gesteigert. Der Komfortgewinn wird verfahrenstechnisch, beispielsweise durch ein entsprechendes Software-Modul, ohne Zusatzkosten, zusätzliches Gewicht und zusätzlichen Bauraum erzielt. Zudem kann der virtuelle Messpunkt im Innenraum des Fahrzeugs in Abhängigkeit von den Umgebungs- und/oder Fahrzeugbedingungen fortlaufend bestimmt und geändert werden. Mit anderen Worten: Der modellierte virtuelle Messpunkt für die Innenraumtemperatur kann durch den Fahrzeuginnenraum "wandem".

Vorzugsweise wird der Ort des virtuellen Messpunkts bezüglich einer Vertikalen in Abhängigkeit einer Außentemperatur, insbesondere von der Fahrzeugumgebungstemperatur, bestimmt. Hierdurch wird maßgeblich das vertikale Temperaturgefälle von warmer und kalter Luft in Abhängigkeit von der auf den Fahrzeuginnenraum einwirkenden Außentemperatur berücksichtigt. Insbesondere wird vorteilhafterweise der Ort des virtuellen Messpunkts bei niedriger Außentemperatur in einem Fußbereich des Innenraums und bei hoher Außentemperatur in einem Kopfbereich des Innenraums bestimmt. Auf diese Weise wird das Klima im Innenraum auch in Extremsituationen komfortabel geregelt.

In einer bevorzugten Ausgestaltung ist ein Bereich, innerhalb dessen der Ort des virtuellen Messpunkts bestimmt wird, vorgebbar. Unvorteilhafte Orte für den virtuellen Messpunkt können dadurch ausgeschlossen werden. Insbesondere kann das Verfahren auf diesem Weg durch einen Benutzer in seinem Sinne beeinflusst werden.

Ein verbesserter Komfort wird erzielt, indem der Ort des virtuellen Messpunkts in einem Bereich eines Sitzplatzes bestimmt oder vorgegeben wird. Ein Fahrer oder sonstiger Insasse kann so festlegen, dass der virtuelle Messpunkt in den Bereich seines Sitzplatzes gelegt wird. Dabei wird vorteilhafterweise zunächst ein belegter Sitzplatz ermittelt oder vorgegeben und anschließend der Ort des virtuellen Messpunkts im Bereich des ermittelten Sitzplatzes bestimmt. Unbelegte Sitzplätze werden auf diese Weise nicht berücksichtigt.

Für eine bevorzugte Ausführungsform ist vorgesehen, dass der Ort für den virtuellen Messpunkt bei einer Änderung der Umgebungs- und Fahrzeugbedingungen neu bestimmt wird. Dies ermöglicht eine kontinuierliche Anpassung der Temperaturregelung an die momentanen Umgebungs- und Fahrzeugbedingungen. Sprungförmige Änderungen können so vermieden werden.

Es können vorteilhafterweise mehrere virtuelle Messpunkte an unterschiedlichen Orten zum Ermitteln zugehöriger Innenraumtemperaturen bestimmt werden. Dadurch können die Bedürfnisse mehrerer Insassen simultan berücksichtigt werden. Insbesondere bei einem Mehrzonen-Klimatisierungssystem ist somit eine differenzierte, insbesondere sitzplatzbezogene individuelle Temperaturregelung und Klimatisierung ermöglicht.

Vorteilhafterweise werden die Innenraumtemperatursignale der mehreren virtuellen Messpunkte situationsabhängig gewichtet. Zusätzlich oder altemativ können die zugehörigen virtuell ermittelten Innenraumtemperaturensignale gemittelt werden. Der Wichtungsfaktor oder -grad für die Gewichtung kann beispielsweise durch einen Benutzer oder situationsbedingt vorgegeben werden.

Als Umgebungsbedingungen werden zweckmäßigerweise eine Außentemperatur und/oder die Intensität der Sonneneinstrahlung berücksichtigt und vorgegeben. Entsprechende Messsignale können mittels zugehöriger Sensoren erfasst werden. Als Fahrzeugbedingung werden vorzugsweise die eigene und momentane Fahrzeuggeschwindigkeit und/oder eine Austrittstemperatur einer Strömungsausgangsöffnung des Klimatisierungssystems und/oder eine Luftaustrittsgeschwindigkeit und/oder eine Luftverteilungseinstellung und/oder Daten von Glasflächen und/oder Daten der Karosserieform bzw. - struktur und/oder Daten von Innenraummaterialien berücksichtigt und verwendet.

Ausführungsbeispiele der Erfindung werden anhand einer Zeichnung näher erläutert. Darin zeigen:
- Fig. 1: ein Blockschaltbild einer Regelungsvorrichtung,
- Fig. 2: eine schematische Darstellung einer Verteilung möglicher Orte für einen virtuellen Messpunkt.

Einander entsprechende Teile sind in allen Figuren mit den gleichen Bezugszeichen versehen.

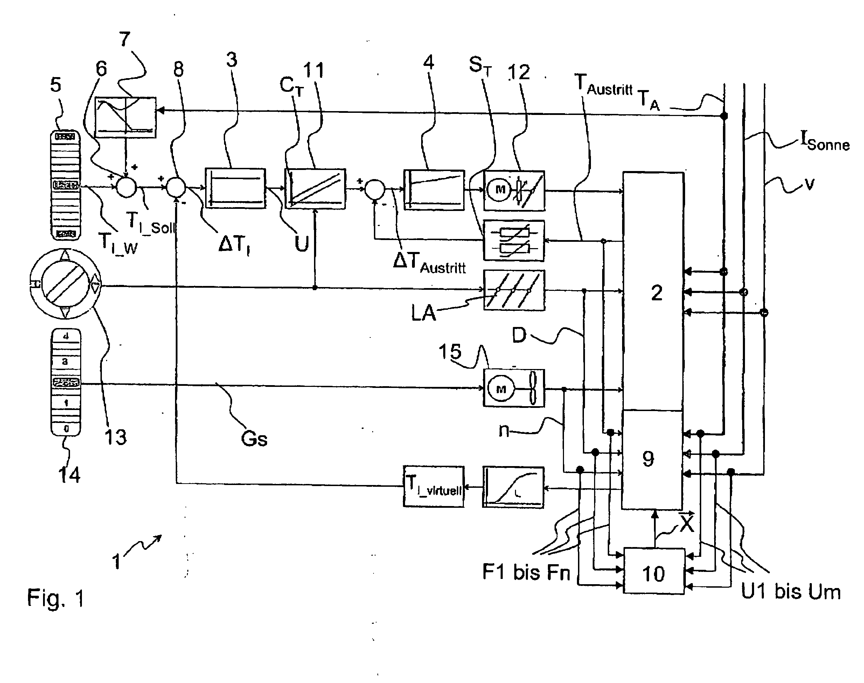

Figur 1 zeigt eine Vorrichtung 1 zur Regelung einer Klimatisierungsanlage für einen Innenraum 2 eines nicht abgebildeten Fahrzeugs als Blockschaltbild.

Die Vorrichtung 1 weist einen Innenraumtemperatur-Regler 3 und einen diesem unterlagerten Austrittstemperatur-Regler 4 auf. Dem Innenraumtemperatur-Regler 3 wird eine Regelabweichung ΔT_{I} für die Innenraumtemperatur T_{I} zugeführt. Über eine Innentemperaturwahleinrichtung 5 kann von einem Benutzer einen gewünschte Innenraumtemperatur T_{I_W} eingestellt werden. Zur Verbesserung des Klimakomforts kann die gewünschte Innenraumtemperetur T_{I_W} anhand der momentanen Außentemperatur T_{A} zum Innenraumtemperatur-Sollwert T_{I_Soll} korrigiert werden. Hierzu ist ein Korrekturmodul 6 vorgesehen.

Zusätzlich kann die messtechnisch erfasste Außentemperatur T_{A} anhand einer Kennlinie eines Kennlinien-Moduls 7 korrigiert werden. Dabei wird der Innenraumtemperatur-Sollwert T_{I_Soll} aus Komfortgründen bei niedrigen Außentemperaturen T_{A} deutlich angeboben.

Zur Ermittlung der Regelabweichung ΔT_{I} für die Innenraumtemperatur T_{I} wird einem Differenzmodul 8 ein virtueller Innenraumtemperatur-Istwert T_{I_virtuell} zugeführt. Der virtuelle Innenraumtemperatur_Istwert T_{I_vlrtuell} wird anhand eines Simulationsmoduls 9 virtuell ermittelt. Dabei wird die Innenraumtemperatur T_{I} mittels des Simulationsmoduls 9 für einen virtuellen Messpunkt an einem zu bestimmenden oder vorgegebenen Ort *X̅* des Innenraums 2 anhand eines thermodynamischen Innenraumtemperaturmodells für die Innenraumtemperaturverteilung virtuell ermittelt.

Dazu wird zunächst der Ort *X̅* des virtuellen Messpunkts im Innenraum 2 des Fahrzeugs bestimmt. Der Ort *X̅* des virtuellen Messpunkts wird von einem Lokalisierungsmodul 10 anhand von Fahrzeugbedingungen F1 bis Fn und Umgebungsbedingungen U1 bis Um, z. B. anhand der Austrittstemperatur T_{Austritt} an einer Strömungsausgangsöffnung einer nicht näher dargestellten Luftverteilungsanlage, von Luftverteilungsinformationen D, der Gebläse-Drehzahl n, von Fahrzeugumgebungs- oder Außentemperatur T_{A}, der Intensität der Sonneneinstrahlung I_{Sonne} und der Fahrzeuggeschwindigkeit v, situationsabhängig bestimmt und fortlaufend aktualisiert und angepasst. In Abhängigkeit von den momentanen Fahrzeug- und Umgebungsbedingungen F1 bis Fn bzw. U1 bis Um wandert der virtuelle Messpunkt dabei derart durch den Innenraum 2, dass er den momentanen Bedingungen weitestgehend gerecht wird.

Zur Vermeidung sprungförmiger Änderungen des Verhaltens des Klimatisierungssystems führt das Lokalisierungsmodul 10 im Falle von Änderungen der momentanen Fahrzeug- oder Umgebungsbedingungen F1 bis Fn, U1 bis Um nur langsame Bewegungen des Ortes 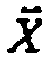 des virtuellen Innenraumtemperatursensors durch.

Der ermittelte Ort *X̅* für den virtuellen Messpunkt wird anschließend dem Simulationsmodul 9 zur Bestimmung des virtuellen Innenraumtemperatur-Istwerts T_{l_virtuell} zugeführt. Dabei wird anhand des thermodynamischen Innenraumtemperaturmodells unter Berücksichtigung der Fahrzeugbedingungen F1 bis Fn, z. B. der Austrittstemperatur T_{Austritt} an einer Ausströmöffnung, von Luftverteilungsinformationen D, der Gebläse-Drehzahl n, und/oder der Umgebungsbedingungen U1 bis Um, z. B. der Fahrzeugaußentemperatur T_{A}, der Intensität der Sonneneinstrahlung I_{Sonne}, der eigenen Fahrzeuggeschwindigkeit v, mittels des Simulationsmoduls 9 am Ort *X̅* der virtuelle Innenraumtemperatur-Istwert T_{l_virtuell} bestimmt. Das thermodynamische Innenraumtemperaturmodell berücksichtigt dabei Fahrzeugdaten, wie z. B. Größe, Abmessungen und Lage von Glasflächen, die Karosseriestruktur, d.h. Materialien und Form, sowie Innenraummaterialien. Das Simulationsmodul 9 ermittelt basierend auf einem Startwert den jeweils virtuellen Wert der Innenraumtemperatur T_{I_virtuell} am Ort 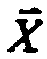 . Der Startwert kann dabei über einen nicht dargestellten Temperatursensor ermittelt werden oder manuell vorgegeben werden. Auch kann als Startwert angenommen werden, dass die Innenraumtemperatur T_{I} gleich der Außentemperatur T_{A} ist.

Der virtuell ermittelte Innenraumtemperatur-Istwert T_{I_virtuell} wird anschließend zur Ermittlung der Regelabweichung ΔT_{I} für die Innenraumtemperatur T_{I} anhand der Differenz aus dem Innentemperatur-Sollwert T_{I_Soll} und dem virtuellen Innenraumtemperatur-Istwert T_{I_virtuell} verwendet.

Die Regelabweichung ΔT_{I} wird dem Innenraumtemperatur-Regler 3, beispielsweise einem P-Regler, zugeführt, der daraus eine Stellgröße U bildet. Die Stellgröße U des Innenraumtemperatur-Reglers 3 wird mittels eines Kennlinienmoduls 11 anhand von Kennlinien C_{T} in eine Führungsgröße F für einen Austrittstemperatur-Regler 4 umgesetzt. Die Auswertung der Kennlinien C_{T} berücksichtigt anhand einer Luftverteilungsinformation D, welche Strömungsausgangsöffnung LA aktiviert ist, d.h. geöffnet ist, und welcher zugehörige Temperatursensor S_{T} für die Austrittstemperatur T_{Austritt} an der betreffenden Strömungsausgangsöffnung LA relevant ist. Die obere der angedeuteten Kennlinien C_{T} ist dabei einer Austrittstemperatur T_{Austritt} an einer Strömungsausgangsöffnung LA im Fußraum, die untere einer Austrittstemperatur T_{Austritt} an einer Strömungsausgangsöffnung LA in der Belüftungsebene zuzuordnen. Die Regeldifferenz ΔT_{Austritt} aus Soll-Austrittstemperatur und Ist-Austrittstemperatur T_{Austritt} wird dem als PI-Regler ausgebildeten Austrittstemperatur-Regler 4 zugeführt, dessen Stellsignal S die Temperaturmischklappe 12 eines Klimageräts steuert. Mit anderen Worten: Zur Verbesserung des Klimakomforts werden als variable Eingangsgrößen, die Luftausblas- oder Luftaustrittstemperatur, Luftdurchsatzmenge, Luftrichtung und somit die Verteilung der Luftmenge auf die einzelnen Luftausströmdüsen bzw. -kanäle, bei der Ermittlung der virtuellen Innenraumtemperatur T_{I} mittels des thermodynamischen Innenraumtemperaturmodells berücksichtigt.

Im Beispiel in Figur 1 (= Klima-Halbautomatik) wird die Luftverteilung manuell über einen Steller 13 (= Einrichtung zur Luftverteilungseinstellung) vorgenommen. Die manuell vorgegebene Luftverteilungsinformation D wird dem Simulationsmodul 9 und dem Lokalisierungsmodul 10 zugeführt. Für Klima-Vollautomaten wird die automatisch aufbereitete Luftverteilungsinformation D in gleicher Weise diesen Modulen 9 und 10 zugeführt.

Darüber hinaus wird als eine weitere Fahrzeugbedingung F1 bis Fn eine Gebläsestärkeeinstellung Gs, die an einer Gebläsestelleinrichtung 14 zur manuellen Einstellung einer Drehzahl n eines Klimagebläses 15 einstellbar ist, bei der Ermittlung der Innenraumtemperatur T_{I} berücksichtigt (Klima-Halbautomatik, Figur 1). Für eine Vollautomatik-Version mit automatischer Einstellung der Gebläseleistung wird die Gebläsedrehzahl n in gleicher Weise den Modulen 9 und 10 zugeführt.

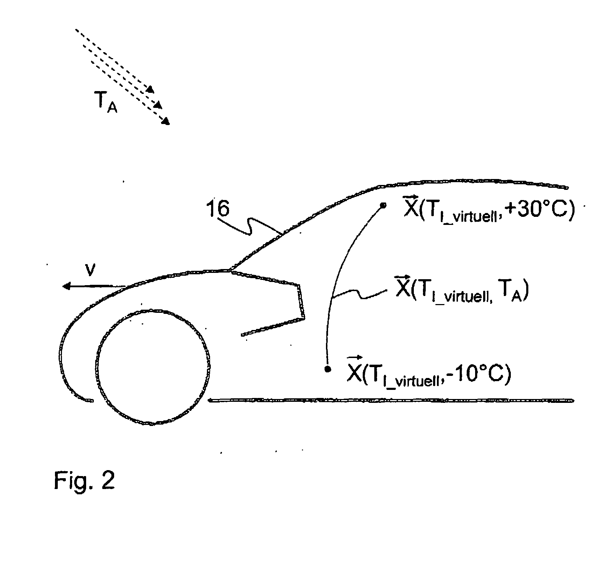

In Figur 2 ist zur Verdeutlichung der Arbeitsweise des Lekalisierungsmoduls 10 eine schematische Darstellung einer beispielhaften Verteilung rnöglicher Orte *X̅* für einen virtuellen Messpunkt in einem Innenraum 2 eines Fahrzeugs 16 dargestellt. Der Ort *X̅* des virtuellen Messpunkts wird bezüglich einem vertikalen Temperaturgefälle in Abhängigkeit von der Außentemperatur T_{A} derart bestimmt, dass bei niedriger Außentemperatur T_{A} der Ort *X̅* in einem Fußbereich des Innenraums 2 und bei hoher Außentemperatur T_{A} Ort *X̅* in einem Kopfbereich des Innenraums 2 liegt. Dadurch wird auch unter veränderlichen Umgebungsbedingungen stets eine komfortable Temperaturwahmehmung im Innenraum 2 erreicht.

Es ist in allen Ausprägungen der Erfindung möglich, durch eine Benutzungshandlung den Bereich, in dem der Ort *X̅* des virtuellen Messpunkts bestimmt wird, vorzugeben. Die potentiellen Orte *X̅* des virtuellen Messpunkts können auf diese Weise eingegrenzt werden, um gezielt die Regelung der Klimatisierungsautomatik zu beeinflussen. Beispielsweise kann der Bereich der potentiellen Orte *X̅* auf einen unteren, hinteren Bereich des Innenraums 2 begrenzt werden, um den Bereich um ein dort sitzendes Kind optimal zu klimatisieren und so eine Unterkühlung des Kindes aufgrund der im unteren Bereich des Innenraums 2 grundsätzlich kühleren Temperatur zu verhindern.

Eine andere Möglichkeit sieht vor, die möglichen Orte 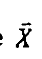 allgemein auf einen Bereich eines Sitzplatzes zu beschränken. Dies kann automatisch oder manuell geschehen. Im automatischen Fall wird zweckmäßigerweise automatisch ein belegter Sitzplatz für die Zuweisung ermittelt.

In weitergehenden Ausgestaltungen kann das Lokalisierungsmodul 10 so ausgebildet sein, dass mehrere im Innenraum bewegliche virtuelle Messpunkte an Orten *X̅*ᵢ bestimmt und für jeden dieser virtuellen Messpunkte separate Innenraumtemperaturen T_{l_virtuell} ermittelt werden. Die virtuellen Innenraumtemperaturen T_{l_virtuell} der virtuellen Messpunkte können zusätzlich situationsabhängig und/oder positionsabhängig gewichtet werden. Bei einem Mehrzonen-Klimatisierungssystem kann beispielsweise eine differenzierte Klimatisierung einzelner Zonen erreicht werden, wobei die jeweilige Zone in Abhängigkeit von der für diesen Bereich ermittelten virtuellen Innenraumtemperatur T_{I_virtuell} klimatisiert wird. Alternativ oder zusätzlich können mehrere virtuell ermittelte Innenraumtemperaturen T_{I_virtuell} gemittelt und als ein Summenwert zur Innenraumtemperaturregelung verwendet werden. Mit anderen Worten: Einzelne virtuell ermittelte Innenraumtemperatur-Istwerte T_{I_virtuell} können für eine separate zonenbezogene Regelung der Innenraumtemperatur T_{I} verwendet werden Alternativ können die einzelnen virtuell ermittelten Innenraumtemperatur-Istwerte T_{l_virtuell} gewichtet und für eine den gesamten Innenraum 2 betreffende Regelung der Innenraumtemperatur Tₗ gegebenenfalls gemittelt herangezogen werden. Auch können beispielsweise mehrere Bereiche für die möglichen Orte *X̅*ᵢ der mehreren virtuellen Messpunkte auf jeweils einen Sitzplatz eingeschränkt werden. Beispielsweise kann überwacht werden, ob ein Sitzplatz besetzt oder unbesetzt ist. Ist ein Sitzplatz besetzt, so werden für diesen Sitzplatz zur Klimatisierung des Sitzplatzbereichs mehrere Orte *X̅* bestimmt.

## Patentansprüche

1. Verfahren zur Regelung eines Klimatisierungssystems für einen Innenraum (2) eines Fahrzeugs (16), wobei Umgebungs- und Fahrzeugbedingungen (F1 bis Fn, U1 bis Um) ermittelt werden, anhand derer ein Ort (*X̅*) für einen virtuellen Messpunkt im Innenraum (2) des Fahrzeugs (16) bestimmt wird, wobei mittels eines thermodynamischen Modells des Innenraums (2) eine die Temperatur am virtuellen Messpunkt des Innenraums (2) repräsentierende Innenraumtemperatur (T_{l_virtuell}) als Regelgröße ermittelt wird.

2. Verfahren nach Anspruch 1, **dadurch gekennzeichnet, dass** der Ort (*X̅*) des virtuellen Messpunkts bezüglich einer Vertikalen in Abhängigkeit einer Außentemperatur (T_{A}) bestimmt wird.

3. Verfahren nach Anspruch 2, **dadurch gekennzeichnet, dass** der Ort (*X̅*) des virtuellen Messpunkts bei niedriger Außentemperatur (T_{A}) in einem Fußbereich des Innenraums (2) und bei hoher Außentemperatur (T_{A}) in einem Kopfbereich des Innenraums (2) bestimmt wird.

4. Verfahren nach einem der vorhergehenden Ansprüche, **dadurch gekennzeichnet, dass** ein Bereich, innerhalb dessen der Ort (*X̅*) des virtuellen Messpunkts bestimmt wird, vorgebbar ist.

5. Verfahren nach einem der vorhergehenden Ansprüche, **dadurch gekennzeichnet, dass** der Ort (*X̅*) des virtuellen Messpunkts in einem Bereich eines Sitzplatzes bestimmt wird:

6. Verfahren nach Anspruch 4, **dadurch gekennzeichnet, dass** zunächst ein belegter Sitzplatz ermittelt wird und anschließend der Ort (*X̅*) des virtuellen Messpunkts im Bereich des ermittelten Sitzplatzes bestimmt wird.

7. Verfahren nach einem der vorhergehenden Ansprüche, **dadurch gekennzeichnet, dass** der Ort (*X̅*) für den virtuellen Messpunkt bei einer Änderung der Umgebungs- und Fahrzeugbedingungen (F1 bis Fn, U1 bis Um) neu bestimmt wird.

8. Verfahren nach einem der vorhergehenden Ansprüche, **dadurch gekennzeichnet, dass** mehrere virtuelle Messpunkte an unterschiedlichen Orten (*X̅*ᵢ) zum Ermitteln zugehöriger lnnenraumtemperaturen (T_{l_virtuell}) bestimmt werden.

9. Verfahren nach Anspruch 8, **dadurch gekennzeichnet, dass** die Innenraumtemperaturen (T_{l_virtuell}) der virtuellen Messpunkte situationsabhängig gewichtet werden.

10. Verfahren nach einem der vorhergehenden Ansprüche, **dadurch gekennzeichnet; dass** als Umgebungsbedingung (U1 bis Um) eine Außentemperatur (T_{A}) und/oder die Intensität (I_{Sonne}) der Sonneneinstrahlung verwendet wird.

11. Verfahren nach einem der vorhergehenden Ansprüche, **dadurch gekennzeichnet, dass** als Fahrzeugbedingung (F1 bis Fn) eine Fahrzeuggeschwindigkeit (v) und/oder eine Austrittstemperatur (T_{Austritt}) einer Ausströmöffnung des Klimatisierungssystems, eine Luftaustrittsgeschwindigkeit und/oder eine Luftverteilungsinformation (D) und/oder Daten von Glasflächen und/oder Daten der Fahrzeugkarosseriestruktur und/oder Innenraummaterialien verwendet werden.

12. Vorrichtung zur Regelung eines Klimatisierungssystems für einen Innenraum (2) eines Fahrzeugs (16), welche Mitteln enthaltet, die Umgebungs- und Fahrzeugbedingungen (F1 bis Fn, U1 bis Um) ermitteln, anhand derer ein Ort (*X̅*) für einen virtuellen Messpunkt im Innenraum (2) des Fahrzeugs (13) bestimmt wird, wobei mittels eines Simulationsmoduls (9) anhand eines thermodynamischen Modells des Innenraums (2) eine den virtuellen Messpunkt des Innenraums (2) repräsentierende Innenraumtemperatur (Tᵢₙₜ) als Regelgröße ermittelt wird.

## Claims

1. Method for the control of an air conditioning system for an interior (2) of a vehicle (16), wherein ambient and vehicle conditions (F1 to Fn, U1 to Um) are detected, on the basis of which a location (*X̅*) for a virtual measuring point in the interior (2) of the vehicle (16) is determined and wherein, by means of a thermodynamic model of the interior (2), an interior temperature (T_{l_virtuell)} representing the temperature at the virtual measuring point of the interior (2) is determined as a control variable.

2. Method according to claim 1, **characterised in that** the location (*X̅*) of the virtual measuring point relative to a perpendicular line is determined in dependence on an external temperature (T_{A}).

3. Method according to claim 2, **characterised in that** the location (X̅) of the virtual measuring point is determined in a foot region of the interior at a low external temperature (T_{A}) and in a head region of the interior at a high external temperature (T_{A}).

4. Method according to any of the preceding claims, **characterised in that** a region within which the location (*X̅*) of the virtual measuring point is determined is presettable.

5. Method according to any of the preceding claims, **characterised in that** the location (*X̅*) of the virtual measuring point is determined in a region of a seat.

6. Method according to claim 4, **characterised in that** an occupied seat is detected, followed by the determination of the location (*X̅*) of the virtual measuring point in the region of the detected seat.

7. Method according to any of the preceding claims, **characterised in that** the location (*X̅*) of the virtual measuring point is determined anew if there is a change in the ambient or vehicle conditions (F1 to Fn, U1 to Um).

8. Method according to any of the preceding claims, **characterised in that** several virtual measuring points are determined at different locations (*X̅*ᵢ) for the detection of associated interior temperatures (T_{l_ virtuell}).

9. Method according to claim 8, **characterised in that** the interior temperatures (T_{l_virtuell}) of the virtual measuring points are weighted in dependence on the situation.

10. Method according to any of the preceding claims, **characterised in that** an external temperature (T_{A}) and/or the intensity (I_{Sonne}) of insolation are/is used as ambient conditions (U1 to Um).

11. Method according to any of the preceding claims, **characterised in that** a vehicle speed (v) and/or a discharge temperature (T_{Austritt}) of a vent opening of the air conditioning system, an air discharge speed and/or an air distribution information (D) and/or data from glass surfaces and/or data of the vehicle body structure and/or materials of the interior are/is used as vehicle conditions (F1 to Fn).

12. Device for the control of an air conditioning system for an interior (2) of a vehicle (16), comprising means for the detection of ambient and vehicle conditions (F1 to Fn, U1 to Um), on the basis of which a location (*X̅*) for a virtual measuring point in the interior (2) of the vehicle (16) is determined, whereby, by means of a simulation module (9) and using a thermodynamic model of the interior (2), an interior temperature (Tᵢₙₜ) representing the virtual measuring point of the interior (2) is determined as a control variable.

## Revendications

1. Procédé de régulation d'un système de climatisation pour l'habitacle (2) d'un véhicule (16), où l'on recherche des conditions inhérentes à l'environnement et au véhicule (F1 à Fn, U1 à Um), à l'aide desquelles on détermine un emplacement (*X̅*) pour un point de mesure virtuel dans l'habitacle (2) du véhicule (16) où, au moyen d'un modèle thermodynamique de l'habitacle (2), on recherche, comme grandeur réglée, une température de l'habitacle (T_{i_virtuelle}) représentant la température au niveau du point de mesure virtuel de l'habitacle (2).

2. Procédé selon la revendication 1, **caractérisé en ce que** l'emplacement (*X̅*) du point de mesure virtuel est déterminé par rapport à une verticale, en fonction d'une température extérieure (T_{A}).

3. Procédé selon la revendication 2, **caractérisé en ce que** l'emplacement (*X̅*) du point de mesure virtuel est déterminé, en cas de température extérieure basse (T_{A}), dans une zone de l'habitacle (2) au niveau des pieds et, dans le cas d'une température extérieure élevée (T_{A}), dans une zone de l'habitacle (2) au niveau de la tête.

4. Procédé selon l'une quelconque des revendications précédentes, **caractérisé en ce qu'**une zone, à l'intérieur de laquelle est déterminé l'emplacement (*X̅*) du point de mesure virtuel, est prédéfinissable.

5. Procédé selon l'une quelconque des revendications précédentes, **caractérisé en ce que** l'emplacement (*X̅*) du point de mesure virtuel est déterminé dans la zone d'une place assise.

6. Procédé selon la revendication 4, **caractérisé en ce que** l'on recherche d'abord une place assise occupée et, ensuite, on détermine l'emplacement (*X̅*) du point de mesure virtuel, dans la zone de la place assise recherchée.

7. Procédé selon l'une quelconque des revendications précédentes, **caractérisé en ce que** l'on détermine à nouveau l'emplacement (*X̅*) pour le point de mesure virtuel, dans le cas d'une modification des conditions inhérentes à l'environnement et au véhicule (F1 à Fn, U1 à Um).

8. Procédé selon l'une quelconque des revendications précédentes, **caractérisé en ce que** l'on détermine, pour la recherche des températures correspondantes (T_{i_virtuelle}) concernant l'habitacle, plusieurs points de mesure virtuels au niveau de différents emplacements (Xᵢ).

9. Procédé selon la revendication 8, **caractérisé en ce que** les températures de l'habitacle (T_{i_virtuelle}) ,au niveau des points de mesure virtuels, sont pondérées en fonction de la situation.

10. Procédé selon l'une quelconque des revendications précédentes, **caractérisé en ce que** l'on utilise, comme condition inhérente à l'environnement (U1 à Um), une température extérieure (T_{A}) et / ou l'intensité (Iₛₒₗₑᵢₗ) de l'ensoleillement.

11. Procédé selon l'une quelconque des revendications précédentes, **caractérisé en ce que** l'on utilise, comme condition inhérente au véhicule (F1 à Fn), une vitesse du véhicule (v) et / ou une température de sortie (Tₛₒᵣₜᵢₑ) au niveau d'une ouverture de sortie du système de climatisation, une vitesse de sortie d'air et / ou une information de répartition de l'air (D) et / ou des données de surfaces de vitres et / ou des données de la structure de carrosserie du véhicule et / ou des matériaux de l'habitacle.

12. Dispositif de régulation d'un système de climatisation pour l'habitacle (2) d'un véhicule (16), dispositif qui comprend des moyens qui recherchent des conditions inhérentes à l'environnement et au véhicule (F1 à Fn, U1 à Um), à l'aide desquelles on détermine un emplacement (*X̅*) pour un point de mesure virtuel dans l'habitacle (2) du véhicule (16) où, au moyen d'un module de simulation (9) obtenu à l'aide d'un modèle thermodynamique de l'habitacle (2), on recherche, comme grandeur réglée, une température de l'habitacle (Tᵢₙₜ) représentant le point de mesure virtuel de l'habitacle (2).
